# DEMANDE DE BREVET EUROPEEN

(11) **EP 2 129 116 A1**
(43) Date de publication de la demande: **02.12.2009**
(21) Numéro de dépôt: 08157227.3
(22) Date de dépôt: 29.05.2008
(51) Int. Cl.: H04N 7/167, H04N 5/00

(54) **Unité et méthode de traitement sécurisé de données audio/vidéo à accès contrôlé**

(71) Demandeur: Nagravision S.A., 1033 Cheseaux-sur-Lausanne (CH)
(72) Inventeur: Gremaud, Fabien, 1618, Châtel-St-Denis (CH); Wenger, Joel, 1260, Nyon (CH)
(74) Mandataire: Leman Consulting S.A.

(57) **Abrégé**

Unité de traitement sécurisé de données audio/vidéo numériques diffusées à accès contrôlé comprenant un module de calcul (MC) chargé de générer un mot de contrôle CW destiné à décrypter les données audio/vidéo, des moyens de réception de messages de sécurité comprenant au moins un cryptogramme CW1' et des premiers paramètres d'exécution de droit (C1) et des seconds paramètres d'exécution de droit (C2), au moins un premier dispositif de contrôle d'accès (CA1) équipé d'une mémoire M1 connecté à l'unité de traitement, ledit dispositif comportant des moyens de vérification des premiers paramètres d'exécution de droit (C1) par rapport au contenu de la mémoire M1 et des moyens de génération d'un premier résultat (S1). L'unité de traitement est **caractérisée en ce qu**'elle comprend un second dispositif de contrôle d'accès (CA2) équipé d'une mémoire M2 associé au module de calcul (MC), ledit dispositif comportant des moyens de génération d'un second résultat (S2) sur la base des seconds paramètres d'exécution de droit (C2) et du contenu de la mémoire M2, et des moyens d'obtention du mot de contrôle CW associés au module de calcul (MC) par combinaison du premier résultat (S1) et du second résultat (S2), La présente invention concerne également une méthode de traitement sécurisé de données audio/vidéo numériques à accès contrôlé exécutée par ladite unité.

## Description

### Domaine technique

La présente invention concerne le domaine des unités de traitement sécurisé de données audio/vidéo numériques à accès contrôlé. Ces unités sont incluses dans différents équipements multimédia comme par exemple des ordinateurs personnels, des équipements mobiles ou des décodeurs de télévision numérique à péage. Cette invention décrit également une méthode de traitement des dites données audio/vidéo avant leur sortie vers un périphérique exploité par un utilisateur.

### Arrière-plan technique

Une unité de traitement de données audio/vidéo numériques comme un décodeur de télévision numérique ou "set top box" comprend un module principal qui regroupe fonctionnalités essentielles au décryptage des données reçues appelé généralement unité de déchiffrement ou module de calcul. Les données audio/vidéo entrant dans le module de calcul sont encryptées avec des mots de contrôle CW transmis dans un flux de messages de contrôle ECM associé au flux des données audio/vidéo. Le module de calcul comprend un circuit particulier chargé d'extraire les mots de contrôle CW des messages de contrôle ECM et de les décrypter à l'aide de clés mises à disposition par l'unité de traitement et/ou par un module de sécurité associé à ladite unité.

Un module de sécurité est un dispositif réputé inviolable contenant diverses clés d'encryption/décryption, des informations servant à identifier un utilisateur sur un réseau et des données qui définissent des droits acquis par l'utilisateur pour la réception d'un flux de données audio/vidéo diffusé. Le module de sécurité peut se trouver sous différentes formes telles qu'une carte à puce amovible insérée dans un lecteur, un circuit intégré soudé sur une carte mère, une carte du type SIM (Subscriber Identity Module) que l'on rencontre dans la plupart des équipements mobiles.

Le document EP1485857B1 décrit une méthode d'appariement d'un décodeur avec un module de sécurité amovible. Le système formé par le décodeur et le module de sécurité reçoit des données audio/vidéo numériques encryptée par un mot de contrôle et des messages de contrôle ECM contenant le mot de contrôle encrypté. Une première clé est attribuée au décodeur et une seconde clé au module de sécurité. Ces deux clés forment une paire unique dans le réseau de diffusion des données audio/vidéo. Seule une des clés de la paire peut être choisie arbitrairement tandis que l'autre est déterminée en fonction de la première clé de manière que la combinaison de ces deux clés est conforme à une clé d'appariement du système tout en permettant de décrypter le mot de contrôle.

Le document EP1421789B1 décrit un procédé de contrôle d'accès à des données cryptées diffusées par un opérateur à une pluralité de groupes d'abonnés. Chaque groupe possède une clé de groupe et chaque abonné reçoit de l'opérateur une clé d'exploitation chiffrée par la clé de groupe pour décrypter les données diffusées. Le procédé consiste à associer la clé d'exploitation chiffrée avec la clé de groupe à une valeur aléatoire pour générer un code secret. Ce code est transmis via un message d'administration EMM aux abonnés pour calculer la clé d'exploitation dès réception de la valeur aléatoire transmise par des messages de contrôle ECM. Le procédé met en oeuvre un seul contrôle d'accès et il permet de dissuader la publication des clés d'exploitation en les rendant dépendantes du groupe d'abonné.

Le document EP1078524B1 décrit une méthode de couplage ou d'appariement pour rendre un module de sécurité dépendant de l'appareil hôte en l'occurrence un décodeur de télévision à péage et vice-versa. Le but de ce mécanisme d'appariement est de protéger les communications entre le module de sécurité et le décodeur afin d'éviter la capture, à partir du canal de transmission, des mots de contrôle permettant de décrypter les données de programmes diffusés. L'appariement permet également d'éviter l'utilisation du module de sécurité avec un appareil hôte étranger ou inversement. La solution utilise une clé ou une paire de clé unique pour encrypter et décrypter les données échangées entre le module de sécurité et le décodeur. Cette clé unique est maintenue secrète et inchangée durant toute la durée de vie des dispositifs concernés. L'un ou l'autre des dispositifs connectés peut vérifier à tout moment la validité des paramètres d'appariement et prendre des contremesures appropriées lorsque l'appariement n'est pas conforme.

### Brève description de l'invention

Le but de la présente invention est de pallier le défaut de sécurité par l'utilisation d'un module de sécurité contrefait dans une unité de traitement de données audio/vidéo encryptées comportant une transmission sécurisée des mots de contrôle utilisant un mécanisme d'appariement du module de sécurité avec l'unité de traitement.

Ce but est atteint par une méthode d'obtention d'un mot de contrôle destiné à décrypter des données audio/vidéo à accès contrôlé reçues par une unité de traitement, cette dernière recevant des messages de sécurité comprenant au moins un cryptogramme, des premiers paramètres d'exécution de droit et des seconds paramètres d'exécution de droit, et étant connectée à au moins un premier dispositif de contrôle d'accès, cette méthode comprenant les étapes suivantes :
- réception par le premier dispositif de contrôle d'accès, d'un message de sécurité comprenant le cryptogramme et les premiers paramètres d'exécution de droit,
- vérification des premiers paramètres d'exécution de droit par rapport au contenu d'une mémoire dudit premier dispositif de contrôle d'accès et lorsque la vérification est positive, génération d'un premier résultat à partir du cryptogramme,
- réception des seconds paramètres d'exécution de droit par un second dispositif de contrôle d'accès comprenant une mémoire, ledit second dispositif de contrôle d'accès étant intégré dans l'unité de traitement,
- obtention d'un second résultat sur la base des seconds paramètres d'exécution de droit et du contenu de la mémoire dudit second dispositif de contrôle d'accès,
- combinaison du premier résultat et du second résultat pour l'obtention du mot de contrôle.
   Le message de sécurité contient non seulement un cryptogramme du mot de contrôle mais aussi des paramètres d'exécution de droit destinés au premier dispositif de contrôle d'accès formé en général par un module de sécurité module et au second dispositif de contrôle d'accès formé en général par un module de calcul intégré à l'unité de traitement. Ainsi, le mot de contrôle est déterminé par la combinaison d'opérations effectuées par au moins deux dispositifs de sécurité.
   Selon un exemple de réalisation, les seconds paramètres d'exécution de droit du message de sécurité comprennent des instructions et des paramètres indiquant à la mémoire associée au module de calcul une référence à un registre contenant une clé. Cette dernière permet de déterminer le second résultat qui combiné avec le premier résultat fourni par le module de sécurité donne le mot de contrôle.
   L'avantage principal de la méthode selon l'invention est que la sécurité des mots de contrôle est gérée à la fois par le module de sécurité et par le module de calcul grâce à des clés issues de la mémoire. Ces clés peuvent d'ailleurs être renouvelées régulièrement par le centre de gestion ou tête de réseau par le biais de messages d'administration soit pour des unités de traitement individuelles, soit pour un groupe prédéterminé d'unités.
   L'objet de la présente invention concerne aussi une unité de traitement sécurisé de données audio/vidéo numériques diffusées à accès contrôlé comprenant un module de calcul chargé de générer un mot de contrôle destiné à décrypter les données audio/vidéo, des moyens de réception de messages de sécurité comprenant au moins un cryptogramme et des premiers paramètres d'exécution de droit et des seconds paramètres d'exécution de droit, au moins un premier dispositif de contrôle d'accès équipé d'une mémoire connecté à l'unité de traitement, ledit dispositif comportant des moyens de vérification des premiers paramètres d'exécution de droit par rapport au contenu de la mémoire et des moyens de génération d'un premier résultat, **caractérisée en ce qu**'elle comprend un second dispositif de contrôle d'accès équipé d'une mémoire associée au module de calcul, ledit dispositif comportant des moyens de génération d'un second résultat sur la base des seconds paramètres d'exécution de droit et du contenu de la mémoire et des moyens d'obtention du mot de contrôle associés au module de calcul par combinaison du premier résultat et du second résultat.
   L'unité de traitement peut comprendre plusieurs modules de sécurité utilisant des algorithmes et fonctions propres à un ou des opérateurs de télévision numérique. Les données audio vidéo sont diffusées avec des messages de sécurité appelés messages de contrôle ECM contenant des instructions et des mots de contrôle dont le décodage nécessite la participation des autres modules de sécurité contenant chacun un secret. Seule la combinaison de tous ces secrets avec un cryptogramme formé grâce à une ou plusieurs clés issues de la mémoire associée au module de calcul permet d'obtenir le mot de contrôle.

### Brève description des figures

L'invention sera mieux comprise grâce à la description détaillée qui va suivre et qui se réfère aux figures annexées données à titre d'exemples nullement limitatif.

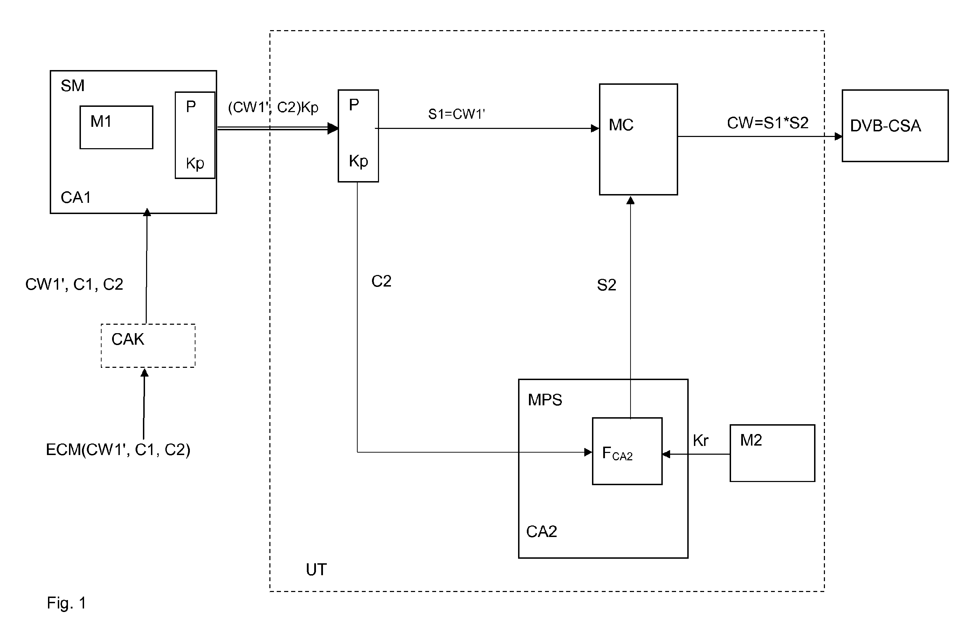

- La figure 1 illustre un schéma bloc d'une configuration d'une unité de traitement comprenant un module de sécurité et un module de calcul utilisant des clés provenant d'une mémoire pour décrypter un mot de contrôle. L'unité de traitement reçoit un message de sécurité comprenant un cryptogramme et les premiers et seconds paramètres d'exécution de droit.

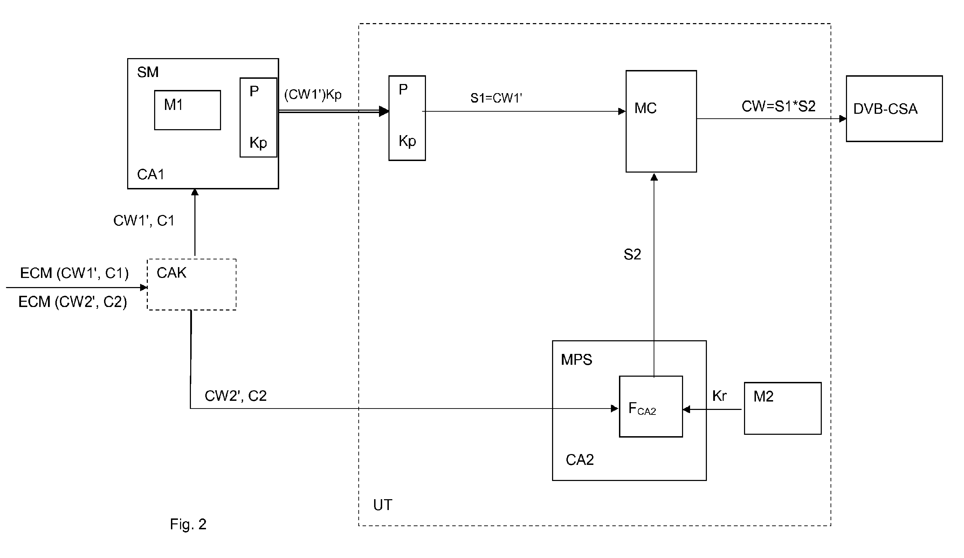

   -- La figure 2 illustre une variante de la configuration de l'unité de traitement de la figure 1. L'unité de traitement reçoit un premier message de sécurité comprenant un premier cryptogramme et les premiers paramètres d'exécution de droit et un second message de sécurité comprenant un second cryptogramme et les seconds paramètres d'exécution de droit.

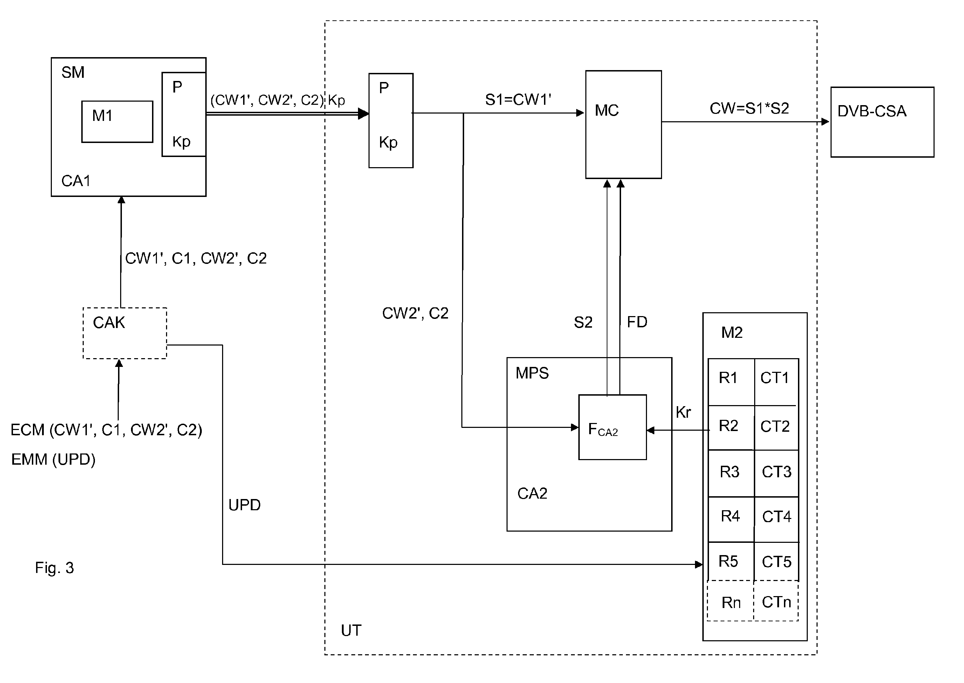

- La figure 3 montre une autre variante de la configuration de l'unité de traitement avec un exemple de mémoire comprenant des registres associés à des compteurs contenant des clés mise à jour par des messages d'administration. L'unité de traitement reçoit des messages de sécurité comprenant à la fois les premiers et seconds cryptogrammes et les premiers et seconds paramètres d'exécution de droit.

### Description détaillée de l'invention

L'unité de traitement représentée par le schéma bloc de la figure 1 constitue un exemple de configuration avec un seul module de sécurité (SM). Selon l'invention, l'unité de traitement peut inclure plusieurs modules de sécurité d'un même type ou de type différents, comme des cartes à puce amovibles ou des circuits intégrés BGA (Ball Grid Array) fixes, collaborant chacun à la détermination du mot de contrôle (CW).

L'unité de la figure 1 comprend un module de sécurité (SM) agissant comme premier contrôle d'accès (CA1) aux données numériques encryptées et un module de calcul (MC) agissant comme second contrôle d'accès (CA2) à ces mêmes données. Le module de calcul (MC) est contrôlé par un module de pilotage sécurisé (MPS) implémenté soit sous la forme d'un logiciel soit sous une forme matérielle ou encore sous une forme hybride matérielle et logicielle. Ce module de pilotage sécurisé (MPS) est associé à une mémoire M2 contenant au moins une clé Kr intervenant dans le calcul d'un résultat S2 servant à déterminer le mot de contrôle CW.

Selon une première variante, le message de contrôle ECM contient un cryptogramme (CW1') représentatif du mot de contrôle (CW), des premiers paramètres d'exécution de droit C1 et des seconds paramètres d'exécution de droit C2. Le message de contrôle ECM (CW1', C1, C2) est en général encrypté avec une clé de transmission connue du module de sécurité (SM). Un module central matériel et logiciel de contrôle d'accès CAK (Control Access Kernel) inclus dans l'unité de traitement (UT) et relié notamment au module de sécurité filtre les messages ECM de contrôle du flux de données audio/vidéo numériques diffusées pour les acheminer vers le module de sécurité.

Les premiers paramètres d'exécution de droit C1 se présentent en général sous forme de droits nécessaires à l'utilisateur pour accéder à un ou plusieurs flux de données audio/vidéo diffusées. Ces droits consistent en des codes indicatifs d'un abonnement, d'une autorisation pour un événement ou d'une période de validité de l'accès, etc.

Le module de sécurité (SM) décrypte le message de contrôle (ECM) avec la clé de transmission et vérifie la concordance des droits associés aux premiers paramètres d'exécution de droit C1 avec les droits stockés dans une mémoire (M1) du module de sécurité (SM). Lorsque la vérification des droits est effectuée avec succès, le module de sécurité (SM) extrait du message de contrôle ECM un bloc (CW1', C2), comprenant le cryptogramme CW1' du mot de contrôle et les seconds paramètres d'exécution de droit C2. Ce bloc est de préférence encrypté avec une clé (Kp) d'un mécanisme P d'appariement tel que décrit dans le document EP1078524B1 connue du module de sécurité et de l'unité de traitement. Cette dernière reçoit le bloc via un canal ainsi sécurisé par l'appariement puis le décrypte avec la clé d'appariement (Kp). Le cryptogramme CW1' extrait du bloc peut constituer le premier résultat S1 déterminé par le premier dispositif contrôle d'accès CA1 c'est-à-dire validé par le module de sécurité est destiné au module de calcul (MC). II est à noter que le premier résultat S1 peut également être calculé par le module de sécurité (SM) à partir du premier cryptogramme CW1' à l'aide d'une fonction mathématique et/ou un algorithme et/ou autres données contenues dans la mémoire M1 dudit module de sécurité (SM).

Les seconds paramètres d'exécution de droit C2 également extraits du bloc sont acheminés vers le module de pilotage sécurisé MPS contrôlant le module de calcul MC. Ces seconds paramètres C2 contiennent par exemple des instructions indiquant au module de calcul (MC) par le biais du module de pilotage sécurisé (MPS) et de la mémoire M2 la manière d'obtenir le résultat S2 servant à calculer le mot de contrôle CW.

Selon un exemple de mémoire illustré par la figure 3, les seconds paramètres d'exécution de droit C2 sont traités par le module de pilotage sécurisé (MPS) associé au module de calcul (MC). Le module de pilotage sécurisé (MPS) va, selon les instructions incluses dans les paramètres C2, extraire une ou les clés Kr d'un, respectivement plusieurs registres (R1, R2, ...Rn) indiqués dans les instructions. Le second résultat (S2) est ensuite formé en appliquant une fonction ou un algorithme dont les caractéristiques sont également issues des paramètres C2 sur la ou les clés Kr provenant d'un ou plusieurs registre (R1, R2, ...Rn).

Le premier résultat (S1)=CW1' fourni par le module de sécurité (SM) et le second résultat (S2) obtenu par le module de calcul (MC) sont traités par une fonction dite de "décodage" FD soit par défaut, soit sélectionnée par le module de pilotage sécurisé (MPS) du module de calcul (MC) selon les instructions fournies par les seconds paramètres d'exécution de droit (C2). Cette fonction de décodage (FD) peut être soit un algorithme à clés symétriques ou asymétrique, soit une fonction à sens unique du type Hash ou une combinaison d'algorithmes et de fonctions dans le cas d'une pluralité de modules de sécurité. Le résultat final obtenu par l'exécution de la fonction de décodage (FD) sur les résultats (S1) et (S2) intermédiaires correspond au mot de contrôle CW=S1*S2 servant à décrypter les données audio vidéo. Le symbole désigne ici l'opération de combinaison des deux résultats (S1) et (S2) avec la fonction de décodage (FD) sélectionnée.

Dans une configuration avec plusieurs de modules de sécurité, chaque module produit un résultat (S1, S3,...Sn) dont la combinaison (S1*S3*...*Sn) avec le résultat (S2) produit par le module de calcul (MC) donne le mot de contrôle CW.

D'autres manières d'obtenir le résultat S2 sont également envisageables. Elles dépendent notamment de la structure de la mémoire M2 associée au module de pilotage sécurisé (MPS) et du mode de stockage des clés. Selon un autre exemple, une clé peut être déterminée au moyen d'une table de pointeurs indiquant des adresses mémoires des clés ou d'autres pointeurs dirigés vers des adresses dans la mémoire où sont stockées la ou les clés. Une structure en arbre comportant plusieurs embranchements permet ainsi de définir des adresses mémoires où des portions de clés ou des clés complètes sont stockées. Les instructions comprises dans les seconds paramètres d'exécution de droit C2 contiennent les informations nécessaires pour définir la ou les clés à partir de ou des tables de pointeurs d'adresses de la mémoire M2.

La figure 2 montre une variante dans laquelle l'unité de traitement reçoit d'une part des messages de contrôle ECM contenant un premier cryptogramme CW1' et les premiers paramètres d'exécution de droit C1 et d'autre part des messages de contrôle ECM contenant un second cryptogramme CW2' et les seconds paramètres d'exécution de droit C2. Le module central matériel et logiciel de contrôle d'accès CAK aiguille les messages de contrôle ECM de manière à acheminer le premier cryptogramme CW1' et les premiers paramètres d'exécution de droit C1 vers le module de sécurité et le second cryptogramme CW2' et les seconds paramètres d'exécution de droit C2 vers le module calcul (MC) via le module de pilotage sécurisé (MPS). Les messages de contrôle ECM entrent ainsi dans l'unité de traitement UT par deux voies distinctes: une voie à destination du module de calcul (MC) passant par le module de sécurité (SM) constituant le premier contrôle d'accès CA1, et une voie à destination du second contrôle d'accès CA2 sans passer par le module de sécurité (SM).

Selon une option, non représentée dans la figure 2, le second cryptogramme CW2' et les seconds paramètres d'exécution de droit C2 peuvent être encryptés avec une clé d'appariement (Kp) connue du module de sécurité. L'unité de traitement possédant la clé d'appariement (Kp) se charge de la décryption lors de la réception des paramètres C2 et du cryptogramme CW2' par la voie menant vers le module de pilotage sécurisé MPS du second contrôle d'accès CA2.

Le module de pilotage sécurisé (MPS) génère alors le second résultat (S2) par combinaison du second cryptogramme CW2' et d'une ou plusieurs clés Kr issues de la mémoire M2 déterminées par les seconds paramètres d'exécution de droit (C2). Le premier résultat S1 est produit par le module de sécurité SM à partir du premier cryptogramme CW1' comme dans la variante de la figure 1. Le mot de contrôle CW est déterminé par le module de calcul (MC) par la combinaison du premier résultat S1 et du second résultat S2.

La figure 3 montre une variante dans laquelle l'unité de traitement reçoit des messages de contrôle ECM contenant à la fois les premiers et seconds cryptogrammes (CW1', CW2') et les premiers et seconds paramètres d'exécution de droit (C1, C2). Le module de sécurité (SM) traite et vérifie les premiers paramètres d'exécution de droit C1 et transmet le premier et le second cryptogramme (CW1', CW2') ainsi que les seconds paramètres d'exécution de droit C2 à l'unité de traitement. Cette dernière décrypte l'ensemble de ces données reçues avec la clé d'appariement (Kp) et achemine le premier cryptogramme CW1' ou le résultat S1 obtenu à partir de ce premier cryptogramme CW1' vers le module de calcul (MC). Les seconds paramètres d'exécution de droit C2 et le second cryptogramme CW2' sont dirigés vers le module de pilotage sécurisé (MPS).

L'exemple d'unité de traitement de la figure 3 comporte une mémoire M2 structurée en une pluralité de registres (R1, R2, R3,...Rn) contenant des clés et associés chacun à un compteur (CT1, CT2,... CTn).

Dans l'application de la télévision numérique à péage, les clés Kr stockées dans les registres (R1, R2,...Rn) peuvent être attribuées chacune à un ensemble de canaux (bouquet) particulier, à un groupe d'utilisateur possédant un type de compte donné (R1 compte standard, R2 compte premium, R3 vidéo à la demande VOD,....) ou encore à un ensemble de programmes ou événements spécifiques (coupe du monde de football, compétitions de ski, tennis, etc.).

La granularité ou niveau de détail des prestations fournies au moyen des clés de registre (Kr) est en général plus grossière que celle fournie par les droits stockés dans le module de sécurité (SM). Ces droits peuvent limiter, par exemple, une durée de visualisation de programmes accessibles à un utilisateur possédant un compte standard dont l'accès est autorisé par la clé du registre R1.

Les clés des registres (Kr) peuvent être renouvelées via un message d'administration EMM transmis au module de sécurité (SM) via le module central matériel et logiciel de contrôle d'accès CAK pour la mise à jour des droits.

Dans une première variante, le message EMM contient un paramètre permettant de changer toutes les clés des registres en fonction des droits stockés dans la mémoire M1 du module de sécurité (SM). Selon une réalisation particulière, le paramètre est transmis via une connexion sécurisée avec une clé d'appariement de la même manière que lors du transfert du cryptogramme (CW1') du mot de contrôle vers le module de calcul (MC).

Dans une variante où le module de sécurité (SM) n'interviendrait pas, les mises à jour UPD contenues dans le message d'administration EMM sont acheminées directement par le module central matériel et logiciel de contrôle d'accès CAK vers la mémoire M2. Ce transfert des mises à jour UPD vers la mémoire M2 peut également être sécurisé à l'aide d'une clé d'appariement connue du module de sécurité.

Le module de pilotage sécurisé (MPS) peut générer le second résultat (S2) par une combinaison du second cryptogramme CW2' et d'une ou plusieurs clés de registres (Kr) déterminées par les seconds paramètres d'exécution de droit (C2). Ces derniers peuvent contenir de plus des instructions relatives à une fonction ou un algorithme (F_{CA2}) à appliquer sur la clé de registre (Kr) seule et/ou pour la combinaison avec le second cryptogramme CW2'. La fonction ou l'algorithme (F_{CA2}) peut être du type XOR (OU exclusif), TDES (Triple Data Encryption Standard), IDEA (International Data Encryption Algorithm), RSA (Rivest Shamir Adleman) à clés asymétriques, ou autre. Les seconds paramètres d'exécution de droit (C2) peuvent également contenir des paramètres désignant une fonction (FD) à appliquer au module de calcul (MC) pour la combinaison des résultats (S1) et (S2) permettant d'obtenir le mot de contrôle (CW).

Dans la configuration de la figure 3, un compteur (CT1, CT2,... CTn) associé à un registre est soit incrémenté, soit décrémenté chaque fois qu'une clé est extraite du registre pour créer le résultat S2 participant au calcul mot de contrôle final CW. Lorsque le compteur (CT1, CT2,... CTn) atteint une valeur maximale prédéterminée après incrémentation ou zéro après décrémentation à partir d'une valeur prédéterminée, l'accès au registre n'est plus possible et entraîne le blocage de la production du résultat S2.

Dans un exemple de mémoire M2 comportant 8 registres, on dispose de la possibilité de créer 256 groupes allant de 0 (00000000) utilisant la clé 0 à 255 (11111111) utilisant la clé 255. Lorsqu'une unité de traitement rejoint le groupe 3 (00000011) utilisant la clé 3 par exemple, correspondant à un compte standard avec possibilité de visionner les matches de football, le centre de gestion transmet à cette unité la clé 3. A chaque utilisation d'un registre (R1, R2,..., Rn), le compteur (CT1, CT2,... CTn) est incrémenté ou décrémenté.

Un compteur (CT1, CT2,... CTn) est réinitialisé, c'est-à-dire remis au maximum ou à zéro, lors de chaque renouvellement de la clé (Kr) du registre correspondant.

Lorsque la clé de registre (Kr) n'est pas changée, un message d'administration EMM spécifique transmis soit par le biais du module de sécurité (SM), soit directement au module de pilotage sécurisé (MPS) peut également réinitialiser le compteur.

En général, les clés de registres (Kr) sont renouvelées à une fréquence déterminée de manière à éviter que les compteurs (CT1, CT2,... CTn) n'atteignent leur valeur maximum respectivement zéro.

Lorsque l'unité quitte le groupe 3 (00000011) pour rejoindre le groupe 1 (00000001) par exemple, correspondant au compte standard uniquement, le centre de gestion transmet la clé 1 à cette unité. La clé 3 reste stockée dans le registre correspondant de la mémoire M2 et son usage est autorisé aussi longtemps que la valeur du compteur associé est en dessous de sa valeur maximum respectivement différente de zéro. Lors du renouvellement de la clé 1, seul le compteur du registre 1 est réinitialisé tandis que le compteur du registre 3 continue d'être incrémenté ou décrémenté jusqu'à épuisement. Un registre avec un compteur non réinitialisé reste inactif et une mise à jour de la clé correspondante ne peut pas être effectuée. La clé 3 est ainsi révoquée et peut être réactivée par un message de réinitialisation visant le compteur concerné.

Une clé révoquée, c'est-à-dire issue d'un registre dont la valeur du compteur est maximum respectivement nulle, ne pourra pas être utilisée pour calculer un mot de contrôle CW. Dans ce cas l'unité de traitement ou plutôt le module de pilotage sécurisé (MPS) peut générer un message d'erreur incitant une réinitialisation du ou des compteurs des registres concernés.

Dans un mode de renouvellement global des clés, il est possible de transmettre un message encrypté par une clé d'appariement contenant toutes les clés de registres. Le module de pilotage sécurisé (MPS) va néanmoins recharger les registres qui sont actifs, c'est-à-dire avec un compteur qui n'a pas atteint la valeur maximale. Les autres registres ne sont ainsi pas rechargés car non utilisés. Cette manière de recharge globale permet avec un seul message de modifier tous les registres actifs dans les unités de traitement.

L'activation des compteurs c'est-à-dire la remise à zéro passera de préférence par le module de sécurité (SM) et sera adressé individuellement à chaque unité de traitement. Selon un mode de réalisation, tous les compteurs sont à leur valeur maximale par défaut.

## Revendications

1. Méthode d'obtention d'un mot de contrôle (CW) destiné à décrypter des données audio/vidéo à accès contrôlé reçues par une unité de traitement UT, cette dernière recevant des messages de sécurité ECM comprenant au moins un cryptogramme CW1', des premiers paramètres d'exécution de droit (C1) et des seconds paramètres d'exécution de droit (C2), et étant connectée à au moins un premier dispositif de contrôle d'accès (CA1), cette méthode comprenant les étapes suivantes :
- réception par le premier dispositif de contrôle d'accès (CA1), d'un message de sécurité comprenant le cryptogramme CW1' et les premiers paramètres d'exécution de droit (C1),
- vérification des premiers paramètres d'exécution de droit (C1) par rapport au contenu d'une mémoire M1 dudit premier dispositif de contrôle d'accès (CA1) et lorsque la vérification est positive, génération d'un premier résultat (S1) à partir du cryptogramme CW1',
- réception des seconds paramètres d'exécution de droit (C2) par un second dispositif de contrôle d'accès CA2 comprenant une mémoire M2, ledit second dispositif de contrôle d'accès CA2 étant intégré dans l'unité de traitement UT,
- obtention d'un second résultat (S2) sur la base des seconds paramètres d'exécution de droit (C2) et du contenu de la mémoire M2 dudit second dispositif de contrôle d'accès CA2,
- combinaison du premier résultat (S1) et du second résultat (S2) pour l'obtention du mot de contrôle CW.

2. Méthode selon la revendication 1, **caractérisée en ce que** les messages de sécurité ECM comprennent un second cryptogramme CW2' destiné au second dispositif de contrôle d'accès CA2, ledit dispositif générant le second résultat (S2) par combinaison du contenu de la mémoire M2 déterminé par les seconds paramètres d'exécution de droit (C2) et du second cryptogramme CW2'.

3. Méthode selon la revendication 2, **caractérisée en ce que** les seconds paramètres d'exécution de droit (C2) s'appliquent sur le contenu de la mémoire M2 du second dispositif de contrôle d'accès CA2, ladite mémoire M2 étant formée d'une pluralité de registres (R1, R2,...Rn) contenant chacun une clé de registre Kr, le second résultat (S2) étant déterminé par une clé de registre Kr désignée par les seconds paramètres d'exécution de droit (C2).

4. Méthode selon la revendication 3 **caractérisée en ce que** le second résultat (S2) est formé par l'application d'une fonction ou algorithme sur la clé Kr d'au moins un registre (R1, R2,...Rn), ladite fonction ou algorithme étant déterminé par les seconds paramètres d'exécution de droit (C2).

5. Méthode selon les revendications 1 à 4 **caractérisée en ce que** les seconds paramètres d'exécution de droit (C2) déterminent une fonction ou un algorithme à appliquer lors de la combinaison du premier résultat (S1) et du second résultat (S2) pour l'obtention du mot de contrôle CW.

6. Méthode selon les revendications 1 à 5 **caractérisée en ce que** les messages de sécurité consistent en des messages de contrôle ECM contenant un ensemble formé par les premiers et seconds cryptogrammes (CW1', CW2') et les premiers et seconds paramètres d'exécution de droit (C1, C2), ledit ensemble étant encrypté par une clé d'appariement (Kp) connue du premier dispositif de contrôle d'accès (CA1).

7. Méthode selon les revendications 1 à 6 **caractérisée en ce que** le premier dispositif de contrôle d'accès (CA1) est formé par un module de sécurité (SM) connecté à l'unité de traitement et **en ce que** le second dispositif de contrôle d'accès (CA2) est formé par un module de calcul (MC) contrôlé par un module de pilotage sécurisé (MPS) implémenté soit sous la forme d'un logiciel, soit sous une forme matérielle, soit sous une forme hybride matérielle et logicielle.

8. Méthode selon la revendication 7 **caractérisée en ce que** l'unité de traitement comprend une pluralité de modules de sécurité fournissant chacun un premier résultat (S1, S3,...Sn) au module de calcul (MC), les mots de contrôle (CW) étant obtenus par une combinaison desdits premiers résultats (S1, S3,...Sn) et du second résultat (S2) effectuée par le module de calcul (MC) sous le contrôle du module de pilotage sécurisé (MPS).

9. Méthode selon la revendication 3 **caractérisée en ce que** les registres (R1, R2,...Rn) comportent chacun un compteur (CT1, CT2,... CTn) incrémentant ou décrémentant à chaque utilisation d'une clé (Kr) issue du registre (R1, R2,...Rn) correspondant.

10. Méthode selon la revendication 9 **caractérisée en ce que** lorsque la valeur d'un compteur (CT1, CT2,... CTn) d'un registre (R1, R2,...Rn) atteint une valeur maximum prédéterminée respectivement nulle, l'accès à la clé (Kr) du registre (R1, R2,...Rn) correspondant est bloqué empêchant l'obtention du second résultat (S2) nécessaire à l'obtention du mot de contrôle CW.

11. Méthode selon les revendications 1 à 10 **caractérisée en ce qu'**elle comprend une étape supplémentaire de mise à jour des clés de registre (Kr) par le biais de messages d'administration EMM transmis par un centre de gestion connecté à l'unité de traitement.

12. Méthode selon les revendications 1 à 10 **caractérisée en ce que** les clés de registre (Kr) sont transmises par le biais de messages d'administration EMM traités par le module de sécurité (SM) en fonction des droits stockés dans la mémoire M1.

13. Méthode selon les revendications 11 et 12 **caractérisée en ce que** la mise à jour des clés de registre (Kr) inclut la réinitialisation des compteurs (CT1, CT2,... CTn) des registres (R1, R2,...Rn) correspondants.

14. Unité de traitement sécurisé de données audio/vidéo numériques diffusées à accès contrôlé comprenant un module de calcul (MC) chargé de générer un mot de contrôle CW destiné à décrypter les données audio/vidéo, des moyens de réception de messages de sécurité comprenant au moins un cryptogramme CW1' et des premiers paramètres d'exécution de droit (C1) et des seconds paramètres d'exécution de droit (C2), au moins un premier dispositif de contrôle d'accès (CA1) équipé d'une mémoire M1 connecté à l'unité de traitement, ledit dispositif comportant des moyens de vérification des premiers paramètres d'exécution de droit (C1) par rapport au contenu de la mémoire M1 et des moyens de génération d'un premier résultat (S1), **caractérisée en ce qu'**elle comprend un second dispositif de contrôle d'accès (CA2) équipé d'une mémoire M2 associé au module de calcul (MC), ledit dispositif comportant des moyens de génération d'un second résultat (S2) sur la base des seconds paramètres d'exécution de droit (C2) et du contenu de la mémoire M2,
et des moyens d'obtention du mot de contrôle CW associés au module de calcul (MC) par combinaison du premier résultat (S1) et du second résultat (S2),

15. Unité de traitement selon la revendication 14 **caractérisée en ce que** le premier dispositif de contrôle d'accès (CA1) est formé par un module de sécurité SM apte à fournir le premier résultat (S1) et **en ce que** le second dispositif de contrôle d'accès (CA2) est formé d'un module de calcul (MC) contrôlé par un module de pilotage sécurisé (MPS) et d'une mémoire M2 comprenant une pluralité de registres (R1, R2,...Rn) contenant chacun une clé de registre (Kr) servant à obtenir le second résultat (S2) au moyen d'un algorithme ou fonction du module de calcul (MC), ledit module de calcul (MC) étant configuré de manière à obtenir le mot de contrôle CW par combinaison du premier résultat (S1) issu du module de sécurité SM et du second résultat (S2).

16. Unité de traitement selon les revendications 14 et 15 **caractérisée en ce qu'**elle est connectée à une pluralité de modules de sécurité aptes à fournir chacun un premier résultat (S1, S3,...Sn) au module de calcul (MC), le mot de contrôle étant obtenu par combinaison des premiers résultats (S1, S3,...Sn) issus des modules de sécurité et du second résultat (S2).

17. Unité de traitement selon la revendication 15 **caractérisée en ce que** les registres (R1, R2,...Rn) comportent chacun à un compteur (CT1, CT2,... CTn) incrémentant ou décrémentant à chaque utilisation d'une clé (Kr) issue du registre correspondant.
